# EUROPEAN PATENT APPLICATION

(11) **EP 1 351 448 A1**
(43) Date of publication of application: **08.10.2003**
(21) Application number: 03290651.3
(22) Date of filing: 14.03.2003
(51) Int. Cl.: H04L 12/28, H04Q 7/22, H04Q 7/38

(54) **Method of random access to a physical random access channel and mobile station implementing this method**

(30) Priority: 05.04.2002 FR 0204280
(71) Applicant: Melco Mobile Communications Europe (SA), 35510 Cesson Sévigné (FR)
(72) Inventor: Belaiche, Vincent, c/o Mitsubishi El.Telec. Europe, 35576 Cesson-Sevigne (FR)
(74) Representative: Blot, Philippe Robert Emile

(57) **Abstract**

The method of random access comprises the selecting (112; 140) of an available uplink access slot; the transmission (136) of a preamble with a commanded power (CPP); the evaluation (138, 162) of the satisfaction of a send authorization criterion (AI) following the transmission of said preamble; and the transmission (164) of a message part when said send authorization criterion (AI) is satisfied.

It comprises, after said step (112; 140) of selecting an available uplink access slot, the detecting (116; 142) of a possible overlap between said selected available uplink access slot and a measurement occasion and in case of detection of an overlap, the selecting (112; 140) of a new available uplink access slot.

Application to a mobile station of a UMTS network.

## Description

The present invention relates to a method of random access to a physical random access channel of an uplink associated with a downlink, for carrying out a random access transmission comprising the sending of at least one preamble and of a message part comprising the steps of:
- selecting an available uplink access slot;
- transmitting a preamble in said selected uplink access slot with a current commanded preamble power;
- evaluating the satisfaction of a send authorization criterion following the transmission of said preamble; and
- transmitting said message part, when said send authorization criterion is satisfied, on said uplink.

The invention furthermore relates to a mobile station for a telecommunication network and a fixed entity of the telecommunication network.

The UMTS standard defines a procedure for random access to a common uplink physical channel termed the PRACH (standing for Physical Random Access CHannel). The communication is set up between a mobile station and a base station of the network. The link allowing the transmission of information between the base station and the mobile station is called the downlink. The reverse link from the mobile station to the base station is called the uplink. The uplink and the downlink are duplexed by frequency division according to the so-called FDD (standing for Frequency Division Duplex) technique.

In a certain mode of operation, and in particular in the RRC CELL_FACH state, the mobile station receives information on an FACH (Forward Access CHannel) channel on the downlink. The mobile station listens continuously to the FACH channel.

In this mode of operation, there is provision for the mobile station to carry out measurements at the request of the network. Such measurements may for example be the reception level in a list of cells.

The cells on which the measurements are to be made can be UTRA FDD cells (UMTS Terrestrial Radio Access Network Frequency Division Duplex) or cells of another RAT (Radio Access Technology, for example GSM, DCS 1800). When the cells are on other UTRA FDD radio frequency channels or on a channel of a RAT other than the radio frequency channel of the FACH channel on the downlink, a problem arises when the mobile station is not capable of receiving this radio frequency channel simultaneously with the FACH channel. This problem is solved by the presence in the FACH frames of certain time intervals known as "measurement occasions" and consisting of one, two, four or eight consecutive FACH frames. In the measurement occasions, the mobile station does not need to receive the FACH channel and can therefore undertake the measurements. The FACH channel is a common channel, that is to say it can send messages to several mobile stations, the destination mobile station being identified in the message. The measurement occasions are defined individually for each mobile station, that is to say that a frame which forms part of a measurement occasion for a mobile station does not necessarily form part thereof for another mobile station. During measurement occasions of a mobile station no message is transmitted to this mobile station, if messages have to be transmitted to it, they are transmitted later outside the measurement occasion.

However, apart from the FACH channel, and during the execution of the random access procedure, the mobile station needs to receive acquisition indicators denoted Al in order to be able to ensure a sending of a message on a physical random access channel of the uplink (PRACH, Physical Random Access CHannel). This acquisition indicator Al is transmitted on an AICH channel (Acquisition Indicator CHannel) of the downlink. The AICH channel is different from the FACH channel, but it is transmitted on the same downlink, and hence the same radio frequency channel.

The acquisition indicator Al is used within the framework of a procedure for the transmit power control of the message part of a transmission performed on the PRACH channel. This procedure provides for the progressive increasing of the transmit power of the preambles of the message, so long as the acquisition indicator Al is not equal to a predetermined value. The message part of the transmission is subsequently sent with a power calculated as a function of the power of the latest preamble sent for which the acquisition indicator returned has the predetermined value.

This power control procedure, commonly designated by the expression PRACH ramp-up, is described in section 6.1 of the 3 GPP TSG RAN WG1/25.214 specification version 3.9.0.

During the power control procedure, the mobile station uses its reception resources for listening to the AICH channel. In so far as the procedure for the transmit power control of the message part may last a significant time, conflicts may arise between the listening to the AICH channel required by the power control procedure and the measurements which have to be made by the mobile station. Thus, measurements might not be performed during certain measurement occasions.

Moreover, the omission of certain measurements in case of overlap between another measurement occasion and an uplink access slot available for the dispatching of a preamble within the framework of a ramp-up procedure may degrade the performance catastrophically. Specifically, certain random accesses may be triggered following a request of the application layer of the mobile station, for example in the case of a low bit rate packet transmission on the uplink. The application layer is in any event completely independent of the lower radio layers. Thus, there is nothing to prevent the application layer from requesting random accesses with the same period as that of the measurement occasions. It is therefore possible for all the measurement occasions to be lost, leading to a catastrophic situation where the mobile station is incapable of satisfying the measurement requests expressed by the network.

The aim of the invention is to propose a method of random access to a physical random access channel of an uplink making it possible to avoid the malfunctions resulting from an absence of measurement performed by a mobile station during the implementation of the transmit power control of the message part of a transmission.

Accordingly, the subject of the invention is a method of random access of the aforesaid type, characterized in that it comprises, after said step of selecting an available uplink access slot, the steps of:
■ detecting a possible overlap between said selected available uplink access slot and a measurement occasion pertaining to a signal whose frequency band has no significant frequency component in common with the frequency band of said downlink, said measurement occasion being provided on a downlink channel; and
■ in case of detection of an overlap, selecting a new available uplink access slot.

According to particular embodiments, the method comprises one or more of the following characteristics:
- it comprises a step of selecting an available uplink access slot set, and said step of selecting an available uplink access slot consists in selecting an available uplink access slot from said available uplink access slot set and said steps of detecting a possible overlap between said selected available uplink access slot and a measurement occasion pertaining to a signal whose frequency band has no significant frequency component in common with the frequency band of said downlink; and in case of detection of an overlap, selecting a new available uplink access slot, are implemented before said step of transmitting said preamble within said selected uplink access slot, with a current commanded preamble power, for as long as a possible overlap between said selected available uplink access slot and a measurement occasion pertaining to a signal whose frequency band has no significant frequency component in common with the frequency band of said downlink is detected, and said step of selecting a new available uplink access slot, after detecting an overlap, consists in a new implementation of the steps of selecting a new available uplink access slot set; and selecting an available uplink access slot from said new available uplink access slot set;
- it comprises, on completion of the step of transmitting said preamble within said selected uplink access slot with a current commanded preamble power, and, for as long as said send authorization criterion is not satisfied, the implementation of a procedure for the transmit power control of said message part on the physical random access channel, said procedure comprising the steps of selecting an available uplink access slot; increasing said current commanded preamble power by a power ramp factor; and transmitting said preamble with said increased current commanded preamble power and said procedure for the transmit power control of said message part comprises, after said step of selecting a new available uplink access slot and before said step of transmitting the preamble with said increased current commanded preamble power, the steps of detecting a possible overlap between said selected available uplink access slot and a measurement occasion pertaining to a signal whose frequency band has no significant frequency component in common with the frequency band of said downlink; and in case of detection of an overlap, selecting a new available uplink access slot; and
- said step of selecting a new available uplink access slot consists in selecting the next available uplink access slot;
- said procedure for the transmit power control of the message part comprises, in case of detection of an overlap, a step of decrementing said commanded preamble power by an additional power ramp factor; and
- said additional power ramp factor has a predefined constant value;
- said additional power ramp factor has a value which is dependent on the duration of the corresponding measurement occasion;
- said additional power ramp factor has a value which is dependent on said power ramp factor; and
- said additional power ramp factor is deduced from at least one message received from the network; and
- said step of detecting a possible overlap between said selected available uplink access slot and a measurement occasion comprises a step of determining the satisfaction of one or the other of the following conditions:
   - said signal to be measured during said measurement occasion cannot be received simultaneously with reception on said downlink, and
   - a useful part of said measurement occasion overlaps the useful part of a downlink access slot corresponding to the selected available uplink access slot; and
- said step of detecting a possible overlap between said selected available uplink access slot and a measurement occasion comprises a step of determining the satisfaction of one or the other of the following conditions:
   ■ said signal to be measured during said measurement occasion cannot be received simultaneously with reception on said downlink or with sending on said uplink, and
   ■ said measurement occasion overlaps at least one of the following three intervals:
      - a time interval covered by a preamble send which would take place within said selected available uplink access slot,
      - a useful part of a downlink access slot corresponding to the selected available uplink access slot, and
      - a time interval corresponding to the sending of said message part transmitted on said uplink;
- said step of detecting a possible overlap between said selected available uplink access slot and a measurement occasion comprises a step of determining the satisfaction of one or the other of the following conditions:

- said signal to be measured during said measurement occasion cannot be received simultaneously with reception on said downlink or with sending on said uplink, and
- said measurement occasion overlaps at least one of the following two intervals:
   - a time interval covered by a preamble send which would take place within said selected available uplink access slot, and
   - a time interval corresponding to the sending of said message part transmitted on said uplink;
- it comprises a step of calculating a cyclic ratio of the measurement occasions which is dependent on the duration of the measurement occasions which is used over a predetermined duration, and said step of selecting a new available uplink access slot in case of detection of an overlap is implemented only if said cyclic ratio is less than a predetermined threshold value.

The subject of the invention is also a mobile station suitable for sending a random access transmission comprising at least one preamble and a message part by random access over a physical random access channel of an uplink associated with a downlink comprising:
- means for selecting an available uplink access slot,
- means for transmitting a preamble in said selected uplink access slot with a current commanded preamble power;
- means for evaluating the satisfaction of a send authorization criterion following the transmission of said preamble; and
- means for transmitting said message part on said uplink when said send authorization criterion is satisfied,
characterized in that it comprises:
■ means for detecting, after said step of selecting an available uplink access slot, a possible overlap between said selected available uplink access slot and a measurement occasion pertaining to a signal whose frequency band has no significant frequency component in common with the frequency band of said downlink, said measurement occasion being provided on a downlink channel (FACH); and
■ means for, in case of detection of an overlap, selecting a new available uplink access slot.

The subject of the invention is finally a fixed entity of a mobile telecommunication network suitable for cooperating with a mobile station, said mobile station and the fixed entity being able to implement the aforesaid method, characterized in that said fixed entity is suitable for transmitting on said downlink, to said mobile station, an additional power ramp factor.

The invention will be better understood on reading the following description, given merely by way of example and while referring to the drawings in which:
- Figure 1 is a schematic view illustrating the various existing channels between a mobile station and a base station of a telecommunication network; and
- Figure 2 is a flowchart of the random access method according to the invention.

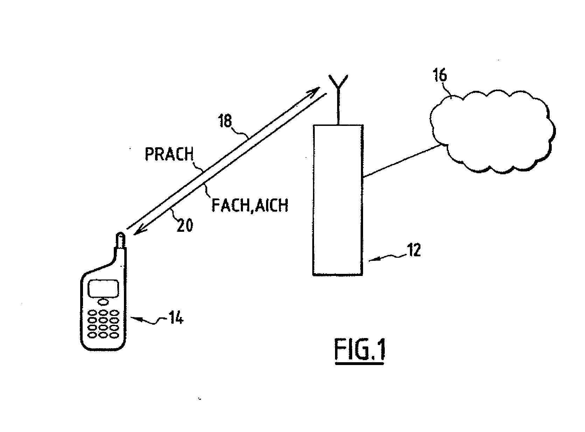

Represented schematically in Figure 1 are a base station 12 of a wireless telecommunication network and a mobile station 14 able to communicate with the base station.

The base station 12 is linked to a wire telecommunication network 16.

The mobile station 14 is for example a mobile telephone, an electronic diary or any other wireless telecommunication equipment.

Set up between the mobile station 14 and the base station 12 are an uplink 18 from the mobile station to the base station and a downlink 20 from the base station to the mobile station.

The uplink and downlink comprise a temporal structure consisting of access time slots or access slots. The access slots of the uplink and downlink are associated in such a way that the access slots of the uplink and the access slots of the downlink correspond one-to-one while being temporally shifted by a predetermined duration.

The mobile telecommunication system is assumed to satisfy the 3GPP TSG RAN WG1/25.214 and 25.211 standards.

According to these standards, a random access transmission is carried out by dispatching at least one preamble and a message part. The message part is sent on a physical random access channel (PRACH) of the uplink 18.

Schematically, at least one preamble is addressed by the mobile station 14 to the network on the uplink. In response to this preamble, an acquisition indicator Al is or is not returned to the mobile station on an AICH channel of the downlink. This indicator is or is not received by the mobile station 14. Depending on the reception of the acquisition indicator Al and on its value, the mobile station 14 resends a new preamble with a different transmit power or sends on the PRACH channel the message part of the transmission, or abandons the random access procedure.

The random access method enlisting this mechanism is described in the 3GPP TSG RAN WG1/25.214 specification version 3.9.0., in particular in section 6.1 thereof.

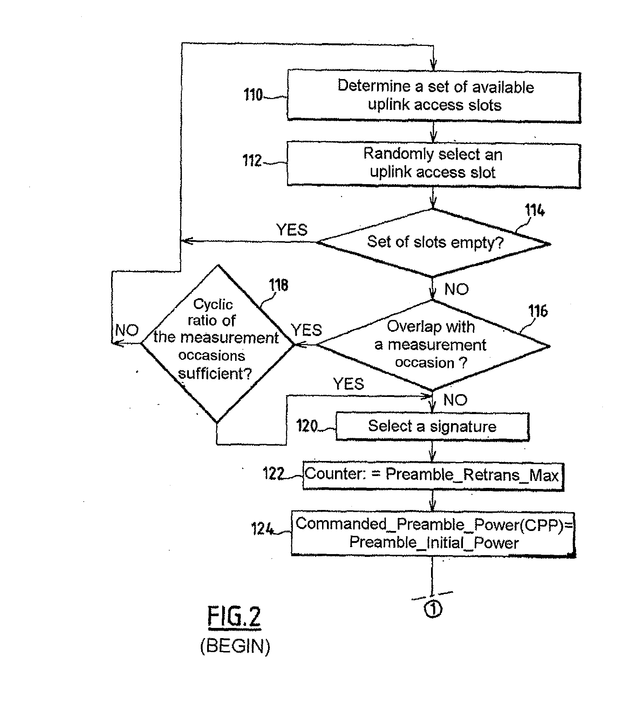

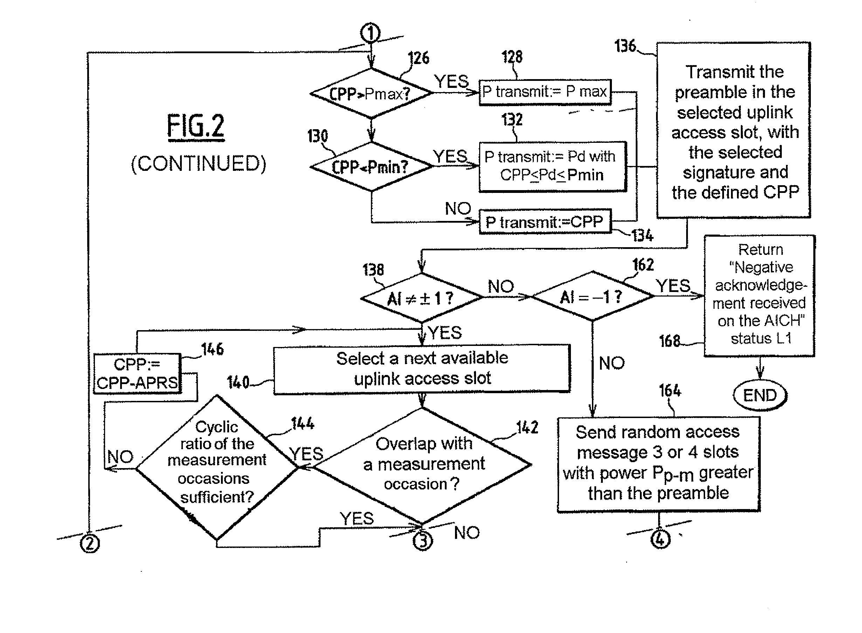

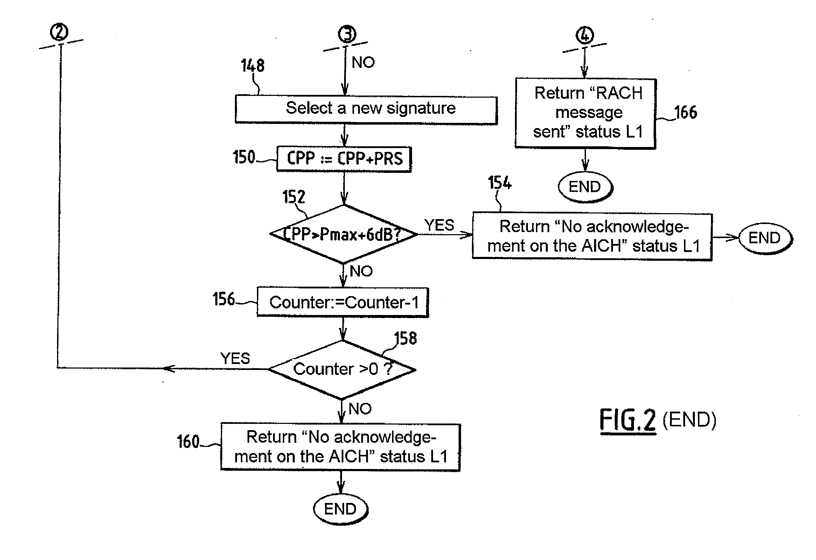

The access method according to the invention generally enlists the framework of the access method described in the aforesaid document while adding certain steps. The method according to the invention is illustrated in Figure 2.

In step 110, the mobile station firstly determines an available uplink access slot set. The set of available uplink access slots is a part, limited in time, of all the available uplink access slots.

The availability of the access slots is dependent on the set of RACH subchannels available for the access service class (ASC), this set being given by the higher layers according to the subclauses defined in items 6.1.1. and 6.1.2. of the 3GPP TSG RAN WG1/25.214 specification version 3.9.0..

In step 112, the mobile station undertakes a selection of an uplink access slot from the previously determined available uplink access slot set. This selection consists in choosing an uplink access slot randomly.

Step 112 fails if the set of slots determined in step 110 is empty. Thus, on the basis of the test performed in step 114, if the set of slots is empty, a new available uplink access slot set temporally following the previous one is determined.

Conversely, if this new set of slots is not empty, and it has been possible to select a slot, step 116 checks whether any overlap of the selected uplink access slot with a measurement occasion is possible.

According to a first implementation of the invention, such an overlap exists if the signal to be measured in a given radio frequency channel in the measurement occasion considered cannot be received by the mobile station simultaneously with the downlink, and if the measurement occasion temporally overlaps the downlink access slot corresponding to the uplink access slot selected, the overlap being at least considered over a useful part of the measurement occasion and of the downlink access slot actually used respectively upon measurement and upon reception of the acquisition indicator Al.

This first implementation of the invention applies to mobile stations incapable of simultaneously receiving a radio frequency channel (FDD and/or other RAT (Radio Access Technology (GSM, DCS1800...)) on which the measurement is to be made and the UTRA FDD radio frequency channel corresponding to the downlink, that is to say on which the FACH and AICH channels are to be received. These mobile stations indicate themselves as such to the UMTS network by setting the "needs DL compressed mode" capability attribute in relation to the radio access system (FDD and/or other RAT (Radio Access Technology (GSM, DCS1800...)) on which the measurement is to be made.

According to a second implementation of the invention, such an overlap exists if the signal to be measured in the given radio frequency channel in the measurement occasion considered cannot be received by the mobile station simultaneously with reception of the downlink or with sending on the uplink, and if the measurement occasion, or at least the useful part of the measurement occasion actually used to perform the measurement, overlaps at least one of the following three intervals:
- the time interval covered by a preamble send which would take place in the selected available uplink access slot,
- a useful part of a downlink access slot corresponding to the selected available uplink access slot, for at least the part actually used on reception of the acquisition indicator Al,
- the time interval corresponding to the random access message which would be transmitted in the message part if the positive acquisition indicator Al were received in the downlink access slot corresponding to the uplink access slot selected, this Acquisition Indicator coming in response by the network to the sending of a preamble in the selected uplink access slot as will be set forth hereinbelow.

This second implementation of the invention applies to mobile stations incapable, on the one hand, of simultaneously receiving a radio frequency channel on which the measurement is to be made and the radio frequency channel corresponding to the downlink on which the FACH channel is to be received, and incapable, on the other hand, of simultaneously receiving a radio frequency channel on which the measurement is to be made and of sending on the uplink. These mobile stations indicate themselves as such to the UMTS network by setting the "needs UL and DL compressed mode" capability attribute in relation to the radio access system on which the measurement is to be made.

According to a third implementation of the invention, such an overlap exists if the signal to be measured in the given radio frequency channel in the measurement occasion considered cannot be received by the mobile station simultaneously with sending on the uplink, and if the measurement occasion, or at least the useful part of the measurement occasion actually used to perform the measurement, overlaps at least one of the following two intervals:
- the time interval covered by a preamble send which would take place in the selected available uplink access slot, and
- the time interval corresponding to the random access message which would be transmitted in the message part if the positive acquisition indicator Al were received in the downlink access slot corresponding to the uplink access slot selected, this Acquisition Indicator coming in response by the network to the sending of a preamble in the selected uplink access slot as will be set forth hereinbelow.

This third implementation of the invention applies to mobile stations incapable of receiving simultaneously on a radio frequency channel on which the measurement is to be made and of sending on the uplink. These mobile stations indicate themselves as such to the UMTS network by setting the "needs UL compressed mode" capability attribute in relation to the radio access system on which the measurement is to be made.

Advantageously, in the case where a risk of overlap of the selected access slot with a measurement occasion is detected, the mobile station determines in step 118 whether a cyclic ratio RC of the measurement occasions is or is not sufficient to circumvent a measurement performed in the measurement occasion at risk of being omitted on account of the overlap.

Accordingly, the cyclic ratio is defined continuously by the mobile station. This cyclic ratio RC is for example defined as the ratio T/T0 of the total duration T of the measurement occasions useable during a time period of a predefined duration T0 immediately prior to the instant considered. Alternatively, this cyclic ratio RC is defined as the ratio T/T' the total duration T of the useable measurement occasions to the total duration T' of the measurement occasions useable or unusable during a time period of a predefined duration T0 immediately prior to the instant considered.

The ratio RC is compared with a predetermined threshold value. This threshold value is advantageously addressed to the mobile station by a fixed entity of the network.

If the ratio RC is less than the predetermined threshold value, the cyclic ratio of the measurement occasions is regarded as insufficient and steps 110 et seq. are reimplemented. Conversely, if the cyclic ratio of the measurement occasions is regarded as sufficient, step 120 is implemented.

In a particular implementation of the invention, the threshold equals 1, so that if there is overlap, steps 110 et seq. are systematically reimplemented.

This step 120 consists in randomly selecting a signature from the set of signatures available within the given ASC. The random function used in this step is such that each of the available signatures can be selected with equal probability.

In step 122, a preamble resend counter denoted "counter" is initialized to a predetermined value denoted Preamble_Retrans_Max. In step 124, the value of the commanded preamble power (Commanded_Preamble_Power) denoted CPP is fixed at an initial value denoted Preamble_Initial_Power.

In the subsequent steps, the transmit power, denoted Pₜᵣₐₙₛₘᵢₜ, used for the transmission of the preamble is defined as a function of the commanded preamble power CPP. More precisely, in step 126, the commanded preamble power CPP is compared with a maximum permitted power Pₘₐₓ. If the commanded preamble power is greater than this maximum permitted power Pₘₐₓ, the transmit power is fixed at the maximum permitted power Pₘₐₓ in step 128.

If such is not the case, the commanded preamble power CPP is compared with a minimum power Pₘᵢₙ in step 130. If the commanded preamble power CPP is less than the minimum power Pₘᵢₙ, the transmit power is fixed in step 132 at a value P_{d} such that this value P_{d} lies between the commanded preamble power CPP and the minimum power Pₘᵢₙ.

If the commanded preamble power is greater than the minimum power Pₘᵢₙ, the transmit power Pₜᵣₐₙₛₘᵢₜ is fixed at the current value of the commanded preamble power CPP.

In step 136, the mobile station undertakes the sending of the preamble in the selected uplink access slot, with the selected signature and with the transmit power Pₜᵣₐₙₛₘᵢₜ defined in the previous steps.

According to the random access method, the fixed entity of the network receiving the preamble, namely the base station 12, dispatches the acquisition indicator Al to the mobile station on the AICH channel.

The acquisition indicator sent by the network can take three values, namely -1, 0 and +1. The value 0 in fact corresponds to nonsending, which occurs when the network has detected no preamble with a sufficient quality, the transmit power of the preamble having been insufficient. The acquisition indicator received by the mobile station can take one of the same three values, and is in all probability equal to the value sent (typically less than 5% error is made).

A first test is performed in step 138 to determine whether the value of the acquisition indicator Al corresponding to the selected signature detected in the downlink random access slot corresponding to the selected uplink random access slot is different from +1 or -1.

The acquisition indicator is actually different from +1 or -1, that is to say it is equal to 0, in all probability when no acquisition indicator is received if the transmit power of the preamble is insufficient. In this case, a new available uplink access slot is selected in step 140. This selected slot is the next available uplink access slot taken after the previously selected uplink access slot.

In step 142, the mobile station determines whether the available uplink access slot selected in step 140 leads to an overlap with a measurement occasion. This test enlists the criteria defined for the test of step 116.

If a potential overlap is detected, step 144 determines whether the cyclic ratio RC of the measurement occasions is sufficient. The test performed is identical to that effected in step 118.

If the cyclic ratio of the measurement occasions is insufficient, the commanded preamble power CPP is decreased in decibels, in step 146, by an additional power ramp factor, denoted APRS.

In so far as the additional power ramp factor APRS is a constant, the commanded preamble power CPP is multiplied by a predetermined value lying between 0 and 1.

According to a first implementation, the additional power ramp factor APRS has a fixed value and is not received from the higher layers. Its value is fixed at for example -1dB.

According to a variant implementation, the additional power ramp factor APRS is not received from the higher layers but has a value which is dependent on the duration of the corresponding measurement occasion. This value is for example equal to 0 dB, if the measurement occasion has a duration of 10 milliseconds; -1 dB, if the duration of the measurement occasion is equal to 20 or 40 milliseconds; and -2 dB if the duration of the measurement occasion is equal to 80 milliseconds.

According to yet another variant, the additional power ramp factor APRS is dependent on a power ramp factor PRS defined in the transmit power control and which will be defined hereinbelow. The additional power ramp factor APRS is for example equal to the power ramp factor PRS.

According to a last variant, the additional power ramp factor is received from the higher layers (RRC), which deduce the value of the additional power ramp factor APRS from one or more messages received from a fixed entity of the network on the downlink.

If no overlap between the next available uplink access slot determined in step 140 and a measurement occasion is detected or if the cyclic ratio of the measurement occasions is sufficient, a new signature is selected randomly from the collection of signatures available within the given ASC in step 148.

In the next step 150, the commanded preamble power CPP is increased, in decibels, by the value of the power ramp factor. In so far as the power ramp factor PRS is constant, the commanded preamble power is multiplied by a predetermined value greater than 1.

In step 152, the value of the commanded preamble power CPP thus increased is compared with the maximum permitted power Pₘₐₓ increased by 6 dB. If the commanded preamble power exceeds the maximum permitted power Pₘₐₓ by 6 dB, the "no acknowledgement on the AICH" status L1 is returned to the higher layers (MAC) of the mobile station. The physical random access procedure is then halted.

Conversely, if the commanded preamble power does not exceed the maximum permitted power Pₘₐₓ by 6 dB, the preamble resend counter is decremented by one unit in step 156.

So long as the value of the counter is strictly positive, steps 126 to 156 are reimplemented by virtue of the test performed in step 158.

As soon as the counter reaches the zero value, the "no acknowledgement on the AICH" status L1 is returned to the higher layers (MAC) of the mobile station in step 160 and the physical random access procedure is halted.

During the test performed in step 138, if the acquisition indicator Al is equal to +1 or -1, a test is performed in step 162 to determine whether the value of the acquisition indicator is equal to -1. If such is not the case, this corresponding to the case where the network regards the transmit power of the preamble to be satisfactory and that the latter accepts the sending of a message part, the message part of the random access communication is sent 3 or 4 uplink random access slots after the slot in the course of which the latest preamble was sent in step 164. The exact number of slots separating the messages part from the latest preamble sent depends on the AICH_Transmission_Timing parameter. The power of the control part of the random access message part is chosen greater by a value Pₚ₋ₘ dB than the power Pₜᵣₐₙₛₘᵢₜ of the latest preamble sent. The transmit power of the data part of the random access message is determined according to subclause 5.1.1.2. of the 3GPP TSG RAN WG1/25.214 standard, version 3.9.0.

On completion of this send, the "RACH message sent" status L1 is returned to the higher layers (MAC) of the mobile station in step 166. The physical random access procedure is then halted.

In the case where in step 162, the acquisition indicator is equal to -1, this corresponding to the case where the network does not want the mobile station to send the message part of the transmission, the "negative acknowledgement received on the AICH" status L1 is returned in step 168 to the higher layers (MAC) of the mobile station and the physical random access procedure is halted.

It is understood that through the implementation of such a method, the measurement occasions overlapping an available uplink access slot, the procedure for progressively increasing the commanded preamble power is temporarily interrupted under certain conditions and a new available uplink access slot is determined before the procedure for progressively increasing the power is resumed.

## Claims

1. Method of random access to a physical random access channel (PRACH) of an uplink (18) associated with a downlink (16), for carrying out a random access transmission comprising the sending of at least one preamble and of a message part comprising the steps of:
- selecting (112; 140) an available uplink access slot;
- transmitting (136) a preamble within said selected uplink access slot with a current commanded preamble power (CPP);
- evaluating (138, 162) the satisfaction of a send authorization criterion (Al) following the transmission of said preamble; and
- transmitting on said uplink (164) said message part when said send authorization criterion (Al) is satisfied (18),
**characterized in that** it comprises, after said step (112; 140) of selecting an available uplink access slot, the steps of:
■ detecting (116; 142) a possible overlap between said selected available uplink access slot and a measurement occasion pertaining to a signal whose frequency band has no significant frequency component in common with the frequency band of said downlink, said measurement occasion being provided on a downlink (16) channel (FACH); and
■ in case of detection of an overlap, selecting (112; 140) a new available uplink access slot.

2. Method according to Claim 1, **characterized in that** it comprises a step (110) of selecting an available uplink access slot set, **in that** said step (112) of selecting an available uplink access slot consists in selecting an available uplink access slot from said available uplink access slot set, **in that** said steps of:
■ detecting (116) a possible overlap between said selected available uplink access slot and a measurement occasion pertaining to a signal whose frequency band has no significant frequency component in common with the frequency band of said downlink; and
■ in case of detection of an overlap, selecting (112) a new available uplink access slot,
are implemented before said step (136) of transmitting said preamble in said selected uplink access slot, with a current commanded preamble power (CPP), for as long as a possible overlap between said selected available uplink access slot and a measurement occasion pertaining to a signal whose frequency band has no significant frequency component in common with the frequency band of said downlink is detected, and **in that** said step of selecting a new available uplink access slot, after detecting an overlap, consists in a new implementation of the steps of:
- selecting (110) a new set of available uplink access slots; and
- selecting (112) an available uplink access slot from said new set of available uplink access slots.

3. Method according to Claim 1 or 2, **characterized in that** it comprises, on completion of the step (136) of transmitting said preamble in said selected uplink access slot with a current commanded preamble power (CPP), and, for as long as said send authorization criterion (Al) is not satisfied, the implementation of a procedure for the transmit power control of said message part on the physical random access channel (PRACH), said procedure comprising the steps of:
• selecting (140) an available uplink access slot;
• increasing (150) said current commanded preamble power (CPP) by a power ramp factor (PRS); and
• transmitting (136) said preamble with said increased current commanded preamble power (CPP),
and **in that** said procedure for the transmit power control of said message part comprises, after said step (140) of selecting a new available uplink access slot and before said step (136) of transmitting the preamble with said increased current commanded preamble power (CPP), the steps of:
■ detecting (142) a possible overlap between said selected available uplink access slot and a measurement occasion pertaining to a signal whose frequency band has no significant frequency component in common with the frequency band of said downlink; and
■ in case of detection of an overlap, selecting (140) a new availavailable uplink access slot.

4. Method according to Claim 3, **characterized in that** said step (140) of selecting a new available uplink access slot consists in selecting the next available uplink access slot.

5. Method according to Claim 3 or 4, **characterized in that** said procedure for the transmit power control of the message part comprises, in case of detection of an overlap, a step (146) of decrementing said commanded preamble power (CPP) by an additional power ramp factor (APRS).

6. Method according to Claim 5, **characterized in that** said additional power ramp factor (APRS) has a predefined constant value.

7. Method according to Claim 5, **characterized in that** said additional power ramp factor (APRS) has a value which is dependent on the duration of the corresponding measurement occasion.

8. Method according to Claim 5, **characterized in that** said additional power ramp factor (APRS) has a value which is dependent on said power ramp factor (PRS).

9. Method according to Claim 5, **characterized in that** said additional power ramp factor (APRS) is deduced from at least one message received from the network.

10. Method according to any of the preceding claims, **characterized in that** said step (116; 142) of detecting a possible overlap between said selected available uplink access slot and a measurement occasion comprises a step of determining the satisfaction of one or the other of the following conditions:
- said signal to be measured during said measurement occasion cannot be received simultaneously with reception on said downlink, and
- a useful part of said measurement occasion overlaps the useful part of a downlink access slot corresponding to the selected available uplink access slot.

11. Method according to any of Claims 1 to 9, **characterized in that** said step (116; 142) of detecting a possible overlap between said selected available uplink access slot and a measurement occasion comprises a step of determining the satisfaction of one or the other of the following conditions:
- said signal to be measured during said measurement occasion cannot be received simultaneously with reception on said downlink or with sending on said uplink, and
- said measurement occasion overlaps at least one of the following three intervals:
• a time interval covered by a preamble send which would take place within said selected available uplink access slot,
• a useful part of a downlink access slot corresponding to the selected available uplink access slot, and
• a time interval corresponding to the sending of said message part transmitted on said uplink.

12. Method according to any of Claims 1 to 9, **characterized in that** said step (116; 142) of detecting a possible overlap between said selected available uplink access slot and a measurement occasion comprises a step of determining the satisfaction of one or the other of the following conditions:
- said signal to be measured during said measurement occasion cannot be received simultaneously with reception on said downlink or with sending on said uplink, and
- said measurement occasion overlaps at least one of the following two intervals:
• a time interval covered by a preamble send which would take place within said selected available uplink access slot, and
• a time interval corresponding to the sending of said message part transmitted on said uplink.

13. Method according to any of the preceding claims, **characterized in that** it comprises a step of calculating a cyclic ratio of the measurement occasions which is dependent on the duration of the measurement occasions which is used over a predetermined duration, and **in that** said step (112; 140) of selecting a new available uplink access slot in case of detection of an overlap is implemented only if said cyclic ratio is less than a predetermined threshold value.

14. Mobile station suitable for sending a random access transmission comprising at least one preamble and a message part by random access over a physical random access channel (PRACH) of an uplink associated with a downlink comprising:
- means for selecting an available uplink access slot,
- means for transmitting a preamble in said selected uplink access slot with a current commanded preamble power (CPP);
- means for evaluating the satisfaction of a send authorization criterion following the transmission of said preamble; and
- means for transmitting on said uplink said message part when said send authorization criterion is satisfied,
**characterized in that** it comprises:
■ means for detecting, after said step of selecting an available uplink access slot, a possible overlap between said selected available uplink access slot and a measurement occasion pertaining to a signal whose frequency band has no significant frequency component in common with the frequency band of said downlink, said measurement occasion being provided on a downlink channel (FACH); and
■ means for, in case of detection of an overlap, selecting a new available uplink access slot.

15. Fixed entity of a mobile telecommunication network suitable for cooperating with a mobile station according to Claim 14, said mobile station and the fixed entity being able to implement the method of Claim 5, **characterized in that** said fixed entity is suitable for transmitting on said downlink (18), to said mobile station, an additional power ramp factor (APRS).
